# EUROPÄISCHE PATENTANMELDUNG

(11) **EP 0 895 078 A1**
(43) Veröffentlichungstag der Anmeldung: **03.02.1999**
(21) Anmeldenummer: 98112305.2
(22) Anmeldetag: 02.07.1998
(51) Int. Cl.: G01N 21/74

(54) **Vorrichtung zur elektrothermischen Verdampfung zu bestimmender Probenbestandteile**

(30) Priorität: 05.07.1997 DE 19728836
(71) Anmelder: Friese, Klaus-Peter, 78048 Villingen-Schwenningen (DE)
(72) Erfinder: Friese, Klaus-Christian, 89231 Neu-Ulm (DE); Friese, Klaus-Peter, 78048 Villingen-Schwenningen (DE)
(74) Vertreter: Pfenning, Meinig & Partner

(57) **Zusammenfassung**

Eine elektrothermische Verdampfungsvorrichtung zum Eintrag von Analyten in spurenanalytische Meßsysteme ist derartig aufgebaut, daß einerseits die Verdampfung möglichst nah am Eintritt zum Meßsystem erfolgt, und daß zum anderen der Probenwechsel, d.h. die Beschickung mit neuer Probe, bequem - gegenenfalls sogar automatisiert - durchgeführt werden kann. Grundlage ist die Verwendung von Tiegeln, die in eine elektrothermischen Verdampfungszelle eingestellt werden. Diese Verdampfungszelle ist ihrerseits in einer Verdampfungseinheit untergebracht, die horizontal beweglich ist und damit direkt unterhalb der Meßeinrichtung positioniert bzw. zum Wechsel der Tiegel in eine andere Stellung gebracht werden kann. Der Wechsel der Probentiegel wird durch einen Stempel erleichtert, der die Tiegel zur Entnahme etwas aus der Verdampfungszelle herausdrückt.

## Beschreibung

Die Erfindung betrifft eine Vorrichtung zur elektrothermischen Verdampfung zu bestimmender Probenbestandteile gemäß dem Oberbegriff des Patentanspruchs 1, wie sie aus DE 34 24 696 C2 bekannt ist.

Die o.g. Vorrichtung soll die thermische Freisetzung von analytisch interessierenden Substanzen in spurenanalytische Meßsysteme ermöglichen. Von besonderem Augenmerk sind hierbei Instrumente der Elementspurenanalytik, die auf Erzeugung eines Plasmas (induktiv-gekoppelt, direkt gekoppelt oder durch Mikrowellen induziert) und der damit verbundenen Dissoziation, Anregung und / oder Ionisierung (atomemissions-, massenspektrometrische Detektion) basieren.

Seit Mitte der 70er Jahre ist die Kopplung einer solchen elektrothermischen Verdampfung mit ICP-AES und ICP-MS bekannt (Nixon, D.E., Fassel, V.A., Kniseley R.N., Analytical Chemistry Vol. 46 No. 2 (1974), S. 210-213). Eingesetzt wurden vielfach Metallstreifen oder auch Graphittiegel (Fricke, F.L., Rose O. Jr., Caruso, J.A., Analytical Chemistry Vol. 47 No. 12 (1975), S. 2018-2020). Diese wurden direkt durch Widerstandsheizung erwähnt oder, wie im Falle eines Mikro-Boots, indirekt beheizt (Blakemoore, W.M., Casey, P.H., Collie, W.R., Analytical Chemistry Vol. 56 (1984), S. 1376-1379). Weitere Anwendungen basierten auf dem Einsatz modifizierter Graphitrohröfen aus der Elektrothermischen Atom-Absorptions-Spektrometrie (ETAAS) (Lamoureux, M.M., Grégoire, D.C., Chakrabarti, C.L., Goltz, D.M., Analytical Chemistry Vol. 66 (1994), S. 3208-3216 und Carey, J.M., Evans, E.H., Caruso, J.A., Shen, W.-L., Spectrochim. Acta Vol. 46B (1991), S. 1711-1721). Solche Verdampfungseinheiten wurden über Schläuche oder Rohre mit dem Probenrohr der Plasmafackel verbunden. Obwohl eine Minimierung des Transportweges im Hinblick auf Transportverluste an Analyten sinnvoll ist, wurden nur wenige Arbeiten veröffentlicht, die eine Verdampfung direkt unterhalb der Plasmafackel beschrieben (Nickel, H., Zadgorska, Z., Spectrochim. Acta Vol. 50B (1995), S. 527-535 und Golloch, A., Haveresch-Kock, M., Plantikow-Voßgätter, F. , Spectrochim. Acta Vol. 50B (1995), S. 501-516)

Eine Vorrichtung zur Zuführung von Analysensubstanz in die Anregungszone eines Plasma-Emissionspektrometers unter Verwendung von Probentiegeln ist aus der eingangs genannten DE 34 24 696 C2 bekannt. In der beschriebenen Ausführung ist der als Tiegel geformte Probenträger senkrecht unter der Anregungszone angeordnet. Der Probenträger wird dabei direkt durch eine elektrische Widerstandsheizung erhitzt, wobei die Kontaktierung durch Stromzuführungsbacken am Tiegel erfolgt. Derartig gestaltete Kontaktierungen im heißen Bereich von Graphitkörpern haben sich jedoch als problematisch im Hinblick auf Alterungseffekte des Graphits gezeigt (M.T.C. de Loos-Vollebregt, L. de Galan, Spectrochim. Acta Vol. 43B (1988), S. 439-449), so daß sich die Verwendung von Küvetten, die mit den Kontakten eine Einheit bilden (vgl. DE 35 34 417 A1), als vorteilhaft erwiesen hat. Ein automatisierbarer Wechsel der Probentiegel wird angesprochen (DE 34 24 696 C2, Spalte 3, Z. 43 ff), jedoch fehlt eine ausreichend genaue Beschreibung der technischen Ausführung einer schwenkbaren oder verschiebbaren Anordnung von Tiegeln bei feststehenden Kontaktblöcken und Düsenplatte sowie Gasanschluß.

Eine Anordnung eines Probentiegels, auf den ein Stempel einwirken kann, ist aus DE 39 07 454 A1 bekannt. Dabei handelt es sich um eine Vorrichtung in Verbindung mit einem querbeheizten Graphitrohr für die elektrothermische Atomabsorptionsspektroskopie. Der Zweck der Anordnung liegt dabei vornehmlich in der zeitweisen Herstellung eines - möglichst gasdichten - mechanischen, thermischen sowie elektrischen Kontaktes zwischen Probenaufnahme und Ofenkörper.

Eine Vorrichtung zur Probenzuführung einer Probensubstanz in eine Anregungsquelle für spektroskopische Zwecke wird in DE 32 33 130 A1 beschrieben. Als vorteilhaft ist dabei der kurze Weg vom Verdampfungsort zur Anregungsquelle anzusehen (Figur 10). Die Beheizung des als Schiffchen ausgebildeten Probenträger wird dabei durch eine Flamme oder induktiv erzeugt (Figuren 6 und 7) bzw. durch Widerstandsheizung, sofern der Probenträger als Metallschlaufe ausgebildet wurde (Figuren 9 a,b).

Bei den Vorrichtungen zur Verdampfung von Analytelementen, die über Schläuche oder Rohre mit dem Meßsysstem gekoppelt sind, ist mit einer erheblichen Kondensation und damit Verlusten der zu untersuchenden Verbindungen in diesem Bereich des Transportweges auszugehen. Dies gilt um so mehr, wenn bei längsbeheizten Rohren der Transportstrom über gekühlte Kontaktzylinder führt. Weiterhin ist bei den bekannten Anordnungen ein erhebliches Totvolumen vorhanden, das zur Verbreiterung der Signale führt.

Nachteilhaft ist demgegenüber bei den Verdampfungseinrichtungen, die unterhalb der Plasmafackeln betrieben werden, ihr fester Standort in der sogenannten Plasma-Box der Spektrometer, in der die Plasma-Fackel montiert ist. Bei der Mehrzahl der ICP-Spektrometer bietet diese Plasma-Box wenig Raum für zusätzliche Einrichtungen. Eine Ablage für mehrere Probentiegel bzw. eine Waage, wie sie für die direkte Analyse fester oder schwer pipettierbarer flüssiger Proben, notwendig ist, kann im allgemeinen dort nicht untergebracht werden. Eine Probenaufgabe - insbesonders bei festen Proben- ist dabei nur umständlich zu bewerkstelligen und eine Automatisierung dieser Vorgänge nicht möglich.

Der Erfindung liegt die Aufgabe zugrunde, eine Vorrichtung zur elektrothermischen Verdampfung zu bestimmender Probenbestandteile so auszubilden, daß
- die Verdampfung möglichst nah am Meßsystem erfolgt
- die Vorrichtung über ein geringes Totvolumen verfügt
- ein großes Probevolumen eingesetzt werden kann
- der Wechsel des Probenträgers bequem erfolgen kann und automatisierbar ist

Die Lösung dieser Aufgabe erfolgt bei einer Vorrichtung gemäß dem Oberbegriff des Patentanspruchs 1 durch die in seinem kennzeichnenden Teil angegebenen Merkmale. Vorteilhafte Weiterbildungen sind den Unteransprüchen entnehmbar.

Die Erfindung wird anhand von Zeichnungen beschrieben. Es zeigt
- Abbildung 1.1.: - die Verdampfungseinheit in der Position zur Verdampfung direkt unterhalb des Kopplungstückes zur Meßeinrichtung
- Abbildung 1.2.: - die Verdampfungseinheit in der Position zum Wechsel des Probentiegels
- Abbildung 2: - eine querbeheizte Verdampfungszelle
- Abbildung 3.1 und 3.2.: - Ausführungsbeispiele der zur Aufnahme des Probentiegels modifizierten Verdampfungszelle
- Abbildung 4: - Verdampfungszelle mit eingesetztem Probentiegel

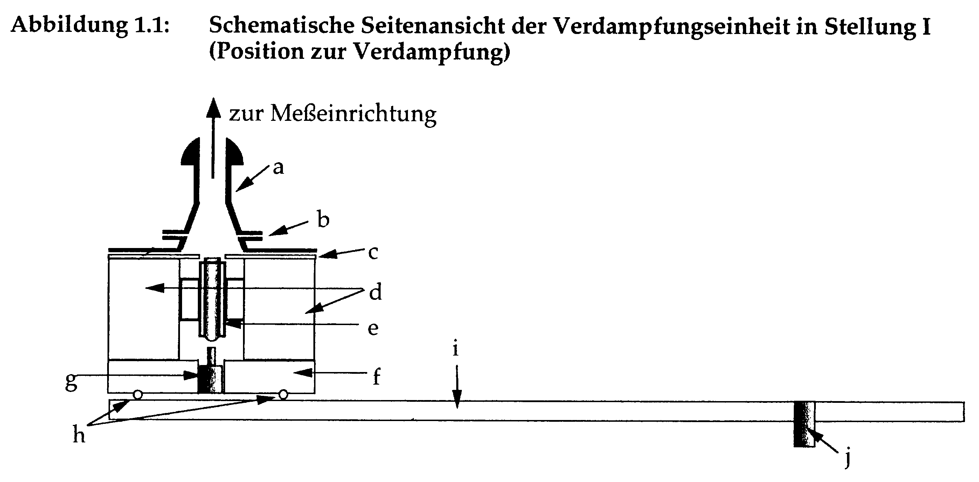

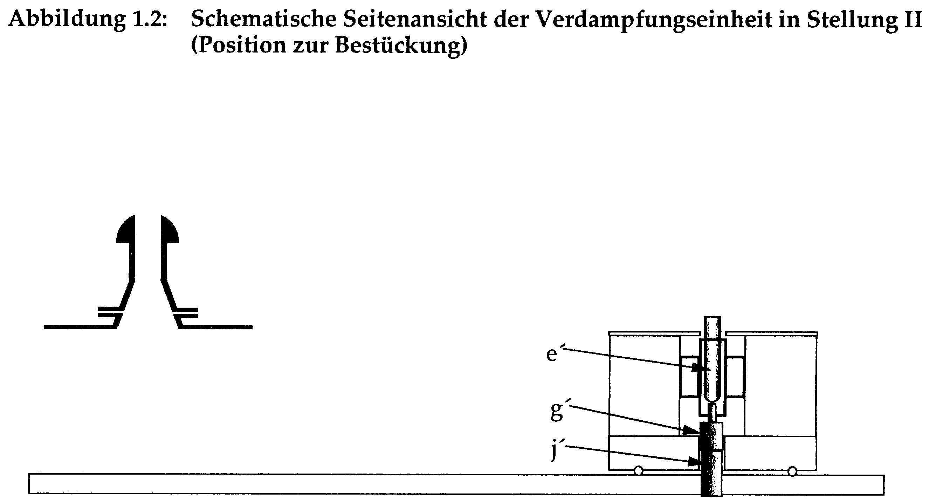

Im folgenden wird anhand des Beispiels des Einsatzes in Verbindung mit ICP-Techniken der Aufbau und seine Charakteristika beschrieben. Bei dem hier beschriebenen Apparat (Abb. 1.1 und 1.2) erfolgt die Verdampfung möglichst direkt zu einem feststehenden, relativ kurzen und kleinvolumigen Kopplungsstück a (Abb. 1.1 und 1.2), gegebenfalls mit zusätzlicher Gaszuführung b (Abb. 1.1 und 1.2), zu der Meßeinheit, d.h. in dieser Anwendung zu dem Glasrohr der Plasmafackel, das zum Transport des Probendampfes in die Plasmazone dient. Als ein solches Kopplungstück kann auch eine modifizierte Plasmafackel dienen, wenn sie dem separaten Kopplungsstück entsprechend über einen von einem einfachen Rohr abweichenden Querschnitt oder über zusätzliche Gaszuführungen verfügt. Abgebildet ist eine kugel- oder walzengelagerte Ausführung (h, Abb. 1.1 und 1.2), die auf einer festen Lauffläche i (Abb. 1.1 und 1.2) liegt. Ebenso möglich sind Versionen, die Schienen, Schlitten oder ähnliche Führungssysteme beinhalten.

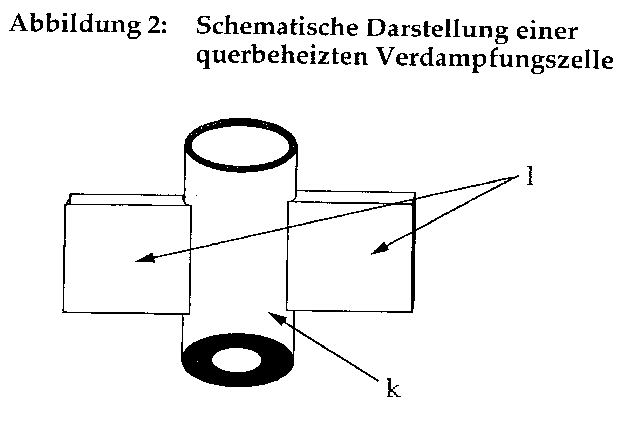

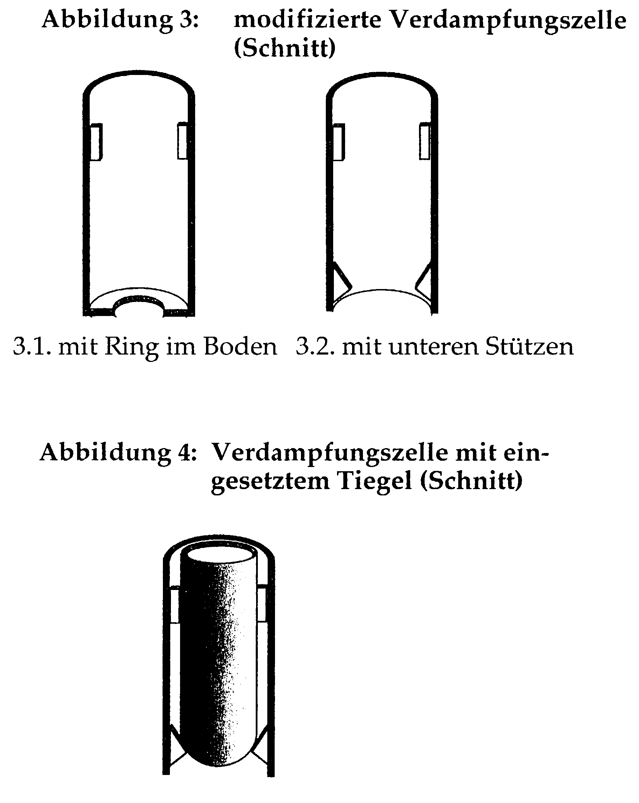

Die Ofeneinheit besteht aus einem Graphitrohr e (Abb. 1.1) (ein anderes Material ist ebenfalls denkbar), das eine seitliche Kontaktierung erlaubt (siehe auch Abb. 2). Diese Querbeheizung ist keine zwingende Voraussetzung für den Aufbau der Apparatur, ist jedoch vorteilhaft. Im weiteren wird daher die Vorrichtung in dieser Ausführung beschrieben. Ein querbeheiztes Graphitrohr k mit integrierten Kontakten 1 (Abb. 2) wird in DE 35 34 417 A1 beschrieben. Ein solches Rohr muß für die hier vorgesehene Anwendung modifiziert werden, d.h. über einen gelochten Boden (Abb. 3.1) oder über Stützen (Abb. 3.2) für den einzusetzenden Tiegel verfügen. Die Kontakte können bei der Verwendung von Graphitrohren vorteilhaft ebenfalls aus Graphit gefertigt werden. Die weitere Auslegung der Kontaktierung kann sich ebenfalls an dem Stand der Technik orientieren, d.h. z.B. über hartmetallbeschichtete, gegeneinander isolierte Messingblöcke d (Abb. 1.1) erfolgen. Durch Boden f (Abb. 1.1), Deckel c (Abb. 1.1) und Seitenteile ergibt sich eine weitgehend geschlossene Verdampfungseinheit, die während der Heizphasen mit einem inerten Schutzgas gespült wird.

Wesentlicher Aspekt der beschriebenen Vorrichtung ist die Beweglichkeit der gesamten Verdampfungseinheit. Wie oben angeführt ist der Raum unterhalb der Meßeinrichtungen beengt. Außerhalb dieses Raums ist die Aufstellung von weiteren Zusatzgeräten, z.B. Probenwechsler und Mikrowaage, leicht möglich. Eine weitgehende Automatisierung der Meßabläufe läßt sich bei einer beweglichen Verdampfungseinheit erreichen, indem mehrere vorbereitete Tiegel angeordnet werden bzw. von und zu einer Mikrowaage transportiert werden.

Wie o.a. ist die Verwendung von Tiegeln (Abb. 4) vorteilhaft, um eine Mehrzahl von Proben vorbereiten zu können und um gegenenfalls die bequeme Dosierung und Wägung von Feststoffen zu ermöglichen. Ein Herausragen des Tiegels aus der Verdampfungszelle während der Verdampfung ist allerdings zu vermeiden, da in diesem Bereich eine erheblich geringere Temperatur der Tiegelwand zu erwarten wäre. Dies kann zu Kondensation der interessierenden Substanzen und zu ihrem verzögerten Eintrag in die Meßeinrichtung oder zu "memory"-Effekten führen. Andererseits ist für ein Greifen zur Entnahme des Tiegels e (Abb. 1.1) ein Angreifen am Tiegel notwendig. Erreicht wird dies in der beschriebenen Apparatur durch einen Stempel g (Abb. 1.1), der in der Position der Verdampfungseinheit außerhalb der Plasmabox (Stempel g', Abb. 1.2.) wirksam werden und durch eine Öffnung am Boden der Verdampfungszelle (Abb. 3.1 und Abb. 3.2) den Tiegel e' (Abb. 1.2) mechanisch einige Millimeter herausdrücken kann.

Die Zweiteilung dieser Vorrichtung in Stempel g (Abb. 1.1) und Stempeltrieb j (Abb. 1.1), beziehungsweise g' und j' (Abb. 1.2), ist nicht zwingend. Möglich ist auch eine einteilige Ausführung anstelle des Stempeltriebes. Die Gefahr von Kontaminationen, die ins Plasma eingetragen werden können und dadurch das Nachweisvermögen beenträchtigen, ist bei der beschriebenen Arbeitsweise außerdordentlich gering.

Die beschriebene Vorrichtung bietet in bisher nicht vorhandenem Maße eine bequeme Handhabung der Probenaufgabe bis hin zu einer möglichen vollautomatischen Durchführung einer großen Anzahl von Analysenzyklen. Unter Verwendung moderner Ofentechnologie wird gleichzeitig eine hohe analytische Leistungsfähigkeit im Hinblick auf schnelle Freisetzungen, minimale Transportverluste und geringe Kontaminationsgefahr erreicht. Die beschriebene Vorrichtung ist gleichermaßen für die Analyse flüssiger wie auch fester Proben geeignet, wobei relativ große Probenmengen eingetragen werden können. Durch die Konstruktion bedingt, ist ein nachträglicher Einbau in eine Vielzahl von Geräten leicht durchführbar.

## Patentansprüche

1. Vorrichtung zur elektrothermischen Verdampfung zu bestimmender Probenbestandteile mit
- einer Verdampfungseinheit unterhalb eines Kopplungstückes eines Meßsystems,
- einem in dieser Verdampfungseinheit beweglich angeordneten Verdampfungstiegel, dessen Öffnung in Richtung der Zuführung zu dem Meßsystem ausgerichtet ist,
**dadurch gekennzeichnet,**
- daß die Verdampfungseinheit derart beweglich angeordnet ist, daß die gesamte Verdampfungseinheit eine horizontale Position direkt unterhalb des Kopplungstückes zu dem Meßsystem sowie weitere, von dieser verschiedene, horizontale Positionen einnehmen kann,
- in der Verdampfungseinheit eine elektrisch beheizte Verdampfungszelle mit einer durchgehenden Öffnung zur Aufnahme des Verdampfungstiegels angeordnet ist,
- ein beweglicher Stempel in bezug auf die Verdampfungseinheit derart angeordnet ist, daß die Oberkante des in der Verdampfungszelle angeordneten Verdampfungstiegels über die Oberkante der Verdampfungseinheit angehoben werden kann.

2. Verdampfungsvorrichtung nach Anspruch 1,
dadurch gekennzeichnet,
daß die Verdampfungszelle über einen durchbohrten Boden oder entsprechende Zapfen verfügt, durch den der einzusetzende Verdampfungstiegel gestützt wird.

3. Verdampfungsvorrichtung nach Anspruch 1 oder 2,
dadurch gekennzeichnet,
daß die Verdampfungszelle aus Graphit oder einen` hochschmelzenden Metall gebildet ist.

4. Verdampfungsvorrichtung nach einem der Ansprüche 1 bis 3, dadurch gekennzeichnet,
daß der Verdampfungstiegel aus Graphit oder einem hochschmelzenden Metall besteht.
